# EUROPÄISCHE PATENTANMELDUNG

(11) **EP 2 684 737 A1**
(43) Veröffentlichungstag der Anmeldung: **15.01.2014**
(21) Anmeldenummer: 13004869.7
(22) Anmeldetag: 26.02.2008
(51) Int. Cl.: B60N 2/20, B60N 2/225, B60N 2/235

(54) **Fahrzeugsitz mit einem Taumelrecliner**

(30) Priorität: 09.03.2007 DE 102007011999; 09.03.2007 DE 102007011998
(62) Teilanmeldung aus: 08716051.1
(71) Anmelder: Johnson Controls GmbH, 51399 Burscheid (DE)
(72) Erfinder: Kienke, Ingo, 42929 Wermelskirchen (DE); Maharajapuram, Karthikeyan, S., 51381 Leverkusen (DE)
(74) Vertreter: Wolff, Felix

(57) **Zusammenfassung**

Die vorliegende Erfindung betrifft einen Fahrzeugsitz, insbesondere Kraftfahrzeugsitz, der ein Sitzteil und eine Lehne aufweist, mit einem Beschlag zur Neigungsverstellung der Lehne relativ zum Sitzteil, der ein mit dem Sitzteil verbundenes Unterteil (2') und ein Oberteil (2'') aufweist, das mit einem Lehnenteil (6) verriegelbar ist, aufweist, wobei das Lehnenteil, vorzugsweise zentrisch, freischwingend, relativ zum Oberteil (2'') gelagert und das Lehenteil in mehreren Positionen mit dem Oberteil verriegelbar ist und die Verriegelung in mindestens einer Position an dem Unterteil (2') oder an einer direkt mit dem Stitzteil verbundenen Halterung erfolgt.

## Beschreibung

Die vorliegende Erfindung betrifft einen Fahrzeugsitz, insbesondere Kraftfahrzeugsitz, der ein Sitzteil und eine Lehne aufweist, mit einem Beschlag zur Neigungsverstellung der Lehne relativ zum Sitzteil, der ein mit dem Sitzteil verbundenes Unterteil und ein Oberteil, das mit einem Lehnenteil verriegelbar ist, aufweist, wobei das Lehnenteil, vorzugsweise zentrisch, freischwingend, relativ zum Oberteil gelagert und in mehreren Positionen verriegelbar ist.

Fahrzeugsitze der gattungsgemäßen Art sind beispielsweise aus der DE 101 21 020 A1 bekannt und weisen einen Beschlag auf, der mit der Rücklehne verriegelbar ist und mit dem der Neigungswinkel der Rücklehne verändert werden kann. Diese Verriegelung kann jedoch entriegelt werden, so dass die Lehne des Kraftfahrzeugsitzes in eine Tisch- oder Easy-Entry-Position überführbar ist. Um die Rücklehne des Kraftfahrzeugsitzes auch in diesen Positionen verriegeln zu können, weist der Beschlag gemäß der DE 101 21 020 A1 einen vergleichsweise aufwendigen Verrastmechanismus auf, der schwierig herzustellen und störanfällig ist.

Es war deshalb die Aufgabe der vorliegenden Erfindung einen Fahrzeugsitz zur Verfügung zu stellen, der die Nachteile des Standes der Technik nicht aufweist.

Gelöst wird die Aufgabe mit einem Fahrzeugsitz, insbesondere einem Kraftfahrzeugsitz, der ein Sitzteil und eine Lehne aufweist, mit einem Beschlag zur Neigungsverstellung der Lehne relativ zum Sitzteil, der ein mit dem Sitzteil verbundenes Unterteil und ein Oberteil, das mit einem Lehnenteil verriegelbar ist, aufweist, wobei das Lehnenteil, vorzugsweise zentrisch, freischwingend, relativ zum Oberteil gelagert und in mehreren Positionen verriegelbar ist und die Verriegelung in mindestens einer Position an dem Unterteil oder an einer direkt mit dem Sitzteil verbundenen Halterung erfolgt.

Die vorliegende Erfindung betrifft einen Fahrzeugsitz, auf dem eine oder mehrere Personen Platz finden können. Bei dem erfindungsgemäßen Fahrzeugsitz kann es sich demnach auch um eine Fahrzeugsitzbank handeln. Zur Neigungsverstellung der Lehne relativ zum Sitzteil weist der erfindungsgemäße Fahrzeugsitz einen Beschlag, beispielsweise einen Taumel- oder Rastbeschlag, auf, der zwischen dem Sitzteil und der Lehne angeordnet ist. Vorzugsweise handelt es sich bei dem Beschlag um einen Taumelrecliner. Dieser Beschlag weist ein Unterteil, das mit dem Sitzteil verbunden ist und ein Oberteil, das mit einem Lehnenteil verriegelbar ist, auf. Dieses Lehnenteil ist im unveniegelten Zustand. relativ zu dem Oberteil des Beschlages freischwingend gelagert, wobei der Beschlag und das Lehnenteil vorzugsweise dieselbe Drehachse haben.

Des Weiteren ist das Lehnenteil in mehreren Positionen, beispielsweise der normalen Gebrauchs-, einer Tisch- und/oder Easy-Entry-Position, verriegelbar, um die Rücklehne relativ zum Sitzteil in der jeweilig gewünschten Position fixieren zu können.

Erfindungsgemäß erfolgt die Verriegelung in mindestens einer Position an dem Unterteil oder an einer direkt mit dem Sitzteil verbundenen Halterung. Gemäß einem weiteren Gegenstand der vorliegenden Erfindung oder vorzugsweise erfolgt die Verriegelung mit nur einem und nicht mehreren Rastmitteln. Durch diese erfindungsgemäße oder bevorzugte Ausführungsform ist der Fahrzeugsitz ausgesprochen einfach herzustellen.

Dadurch, dass der erfindungsgemäße Fahrzeugsitz weniger Teile aufweist als Fahrzeugsitze gemäß dem Stand der Technik, ist er darüber hinaus wartungs- und verschleiß-unanfälliger. Eine Verschmutzung des erfindungsgemäßen Fahrzeugsitzes wird in einer bevorzugten Ausführungsform noch durch eine Kapselung des Beschlages zumindest vermindert. Mit dem erfindungsgemäßen Fahrzeugsitz lässt sich eine Gewichtserspamis realisieren.

Vorzugsweise weist das Rastmittel Formschlussmittel auf, die mit komplementären Formschlussmitteln, die vorzugsweise an dem Oberteil oder an dem Unterteil des Beschlages angeordnet sind, zusammenwirken. Besonders bevorzugt weist das Oberteil und/oder das Unterteil Formschlussmittel entsprechend den jeweiligen oben genannten Positionen der Sitzlehne auf.

Vorzugsweise weist das Formschlussmittel mindestens zwei unterschiedliche Bereiche auf, wobei sich die Bereiche insbesondere durch die Art und/oder Größe der Formschlussmittel unterscheiden. Ganz besonders bevorzugt sind das Formschlussmittel Zähne, die mit entsprechenden Zähnen, vorzugsweise an dem Oberteil und/oder dem Unterteil des Beschlages, zusammenwirken. Am meisten bevorzugt sind die Zähne in dem einen Bereich bezüglich Breite und/oder Länge größer als die Zähne in dem anderen Bereich.

Ganz besonders bevorzugt ist das Rastmittel eine sogenannte Rastklinke, die aus dem Reclinerbau bekannt ist.

Vorzugsweise ist diese Rastklinke mit einer Spermocke in der jeweiligen Position, beispielsweise der normalen Gebrauchs-, Easy-Entry- oder der Tischposition, verriegelbar. In den letzten beiden Positionen wird die Rückenlehne insbesondere mit dem größeren Formschlussmittel verriegelt, dass ganz besonders bevorzugt mit Formschlussmifteln an dem Unterteil des Recliners oder an einer Halterung, die direkt mit dem Sitzteil verbunden ist, zusammenwirkt.

Ganz besonders bevorzugt ist die Lageänderung zwischen den Formschlussmitteln an dem Rastmittel und an dem Beschlag durch das vergrößerte Formschlussmittel und/oder eine verlängerte Verriegelungskurve an dem Rastmittel, die mit der Spermocke zusammenwirkt, kompensierbar.

In einer anderen bevorzugten Ausführungsform weist der Beschlag ein zusätzliches Formschlussmittel, beispielsweise einen Haken, auf, das mit einem komplementären Formschiussmittel, das an dem Unterteil oder an der Halterung angeordnet ist, zusammenwirkt. Dieses Formschlussmittel fixiert vorzugsweise die Position der Rückenlehne in der Tisch- und/oder Easy-Entry-Position. Vorzugsweise ist dieses Formschlussmittel drehbar angeordnet. Der Drehpunkt dieses zusätzlichen Formschlussmittels kann mit dem Drehpunkt des Rastmittels übereinstimmen oder nicht, wobei eine Übereinstimmung bevorzugt ist.

Vorzugsweise weist der Fahrzeugsitz eine weitere Spermocke auf, die mit dem Formschlussmittel zusammenwirkt und diese daran hindert sich ungewollt zu lösen. Vorzugsweise ist diese Sperrnocke drehbar angeordnet. Der Drehpunkt dieser zusätzlichen Spermocke kann mit dem Drehpunkt der Spermocke des Rastmittels übereinstimmen oder nicht, wobei eine Übereinstimmung bevorzugt ist.

Vorzugsweise betätigt und/oder verriegelt die Spermocke das Formschlussmittel.

Vorzugsweise sind die Beschläge des erfindungsgemäßen Sitzes mehrschichtig aufgebaut.

Vorzugsweise handelt es sich bei dem Beschlag um ein Taumelgetriebe und demnach um einen sogenannten Taumelrecliner.

Vorzugsweise ist der Beschlag zumindest teilweise gekapselt, um dessen Verschmutzung zu mindern.

Im folgenden wird die Erfindung anhand der Figuren 1 bis 5 erläutert. Diese Erläuterungen sind lediglich beispielhaft und schränken den allgemeinen Erfindungsgedanken nicht ein.
- **Figur 1**: zeigt den erfindungsgemäßen Fahrzeugsitz.
- **Figur 2**: zeigt den Beschlag 1 in der normalen Gebrauchsposition.
- **Figur 3**: zeigt den Beschlag 1 in der Tischposition.
- **Figuren 4a-d**: zeigen noch eine Ausführungsform des Beschlages 1 in der Gebrauchs- und in der Easy-Entry-Position.
- **Figuren 5a-d**: zeigen eine zusätzliche Ausführungsform des Beschlages 1 in der Gebrauchs und in der Easy-Entry-Position.

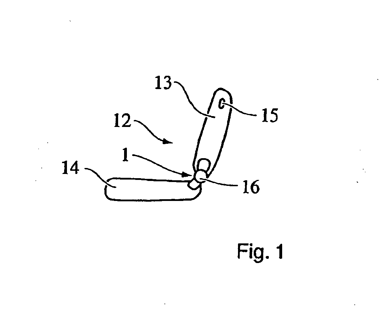

**Figur 1** zeigt den erfindungsgemäßen Sitz 12 mit einem Sitzteil 14 und einer Rücklehne 13. Diese Rücklehne 13 ist mittels des Beschlags 1 an dem Sitzteil 14 angeordnet. Der Neigungswinkel der Rücklehne kann mit dem Handrad 16, das mit dem Beschlag 1 zusammenwirkt, oder einem anderen beispielsweise motorischen Antrieb verstellt werden. Des Weiteren kann die Rückenlehne 13 von dem Beschlag 1 anhand des Entriegelungshebels 15 oder eines vergleichbaren Entriegelungsmechanismus so entriegelt werden, dass die Rücklehne beispielsweise in eine Easy-Entry- und/oder Tischposition, in der sie im wesentlichen waagerecht angeordnet ist, verbracht und dort verriegelt werden kann.

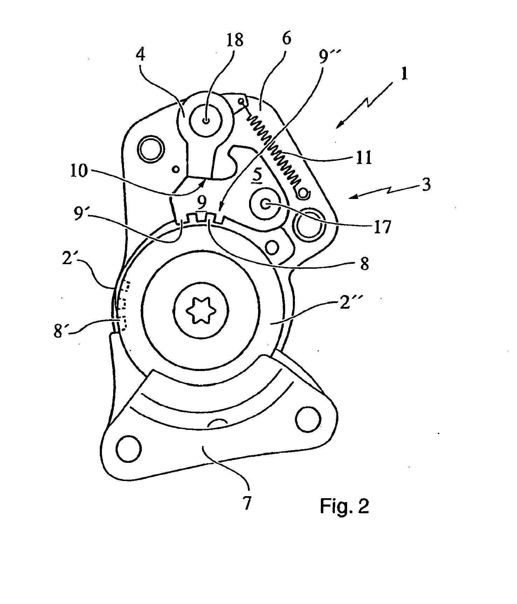

In **Figur 2** ist eine erste Ausführungsform des Beschlages 1 gemäß Figur 1 dargestellt. Der Beschlag weist in dem vorliegenden Fall ein Taumelgetriebe zur Neigungsverstellung der Rücklehne 13 relativ zum Sitzteil 14 auf. Dieses Taumelgetriebe besteht aus einem Unterteil 2', das mittels des Beschlagteils 7 an dem Sitzteil befestigt ist und einem Oberteil 2", das mittels des Lehnenteils 6 an der Rücklehne 13 des erfindungsgemäßen Fahrzeugsitzes 12 angeordnet ist. Das Lehnenteil 6 und damit die Rücklehne ist freischwingend, vorzugsweise zentrisch, relativ zu dem Oberteil 2" gelagert. Um zu vermeiden, dass sich das Lehnenteil 6 ungewollt relativ zu dem Oberteil 2" bewegt, ist das Lehnenteil 6 mittels einer Verriegelung 3 mit dem Oberteil 2" verriegelt. Diese Verriegelung 3 besteht aus einem Rastmittel 5, in dem vorliegenden Fall einer Rastklinke 5, die an ihrer Unterseite Formschlussmittel 9 in Form einer Verzahnung aufweist. Diese Verzahnung 9 weist zwei Bereiche 9', 9" auf, wobei in dem Bereich 9' ein größerer insbesondere längerer Zahn angeordnet ist als in dem Bereich 9". Die Rastklinke 5 ist um die Drehachse 17 drehbar gelagert und im Uhrzeigersinn drehend vorgespannt. Um zu vermeiden, dass die Rastklinke 5 ungewollterweise außer Eingriff mit den Formschlussmittein 8, die an dem Oberteil 2" angeordnet sind, gerät, weist die Verriegelung 3 eine Spermocke 4 auf. Das vordere Ende der Spermocke wirkt mit einer Verriegelungskurve 10 zusammen und hindert die Rastklinke 5 daran, sich im Uhrzeigersinn zu drehen. Zur Lösung der Rastklinke 5, beispielsweise durch den Entriegelungshebel 15, wird die Spermocke 4 gegen den Uhrzeigersinn und entgegen der Federkraft der Feder 11 verdreht. Dadurch kann sich die vorgespannte Rastklinke 5 so im Uhrzeigersinn drehen, dass die Verzahnung 9 nicht mehr form- und/oder kraftschlüssig mit der Verzahnung 8 des Oberteils 2" zusammenwirkt. Sodann kann das Lehnenteil 6 freischwingend beispielsweise in Richtung des Sitzteils verschwenkt werden. Um das Lehnenteil 6 beispielsweise in der Tisch- und/oder Easy-Entry-Position ebenfalls verriegeln zu können, weist das Unterteil 2' ebenfalls eine Verzahnung 8' auf, die vorzugsweise ebenfalls zwei Bereiche mit unterschiedlich ausgeformter insbesondere unterschiedlich tiefer Verzahnung aufweist. Auch in dieser Position kann das Lehnenteil 6 ebenfalls mit der Rastklinke 5 sowie der Spermocke 4 verriegelt werden. Die Verriegelung erfolgt beispielsweise durch Loslassen oder erneute Betätigung des Entriegelungshebels 15. Da das Taumelgetriebe prinzipbedingt eine exzentrische Bewegung des Lehnenteils 6 gegenüber dem sitzteilseitigen Beschlagteil 7 bewirkt, ist die Rastklinke erfindungsgemäß mit einem vergrößerten ersten Formschlussmittel 9', vorzugsweise einem Zahn, ausgestattet, welcher diese Lageänderung kompensiert. In der Easy-Entry- oder Tischposition wird das Lehnenteil 6 deshalb vorzugsweise nur von dem Formschlussmittel 9' gehalten.

Des Weiteren ist die Verriegelungskurve 10 an der Rastklinke 5, mit der die Spermocke 4 zusammen wirkt, gegenüber herkömmlichen Systemen verlängert ausgeführt, so dass auch dadurch eine durch das Taumelgetriebe bedingte Lageänderung kompensierbar ist und die Sperrnocke die Rastklinke in jeder Lage verriegelt. Die Sperrnocke 4 wird so lange mittels der Federkraft 11 um den Drehpunkt 18 gedreht bis deren Spitze form- und/oder kraftschlüssig mit der Verriegelungskurve 10 zusammenwirkt.

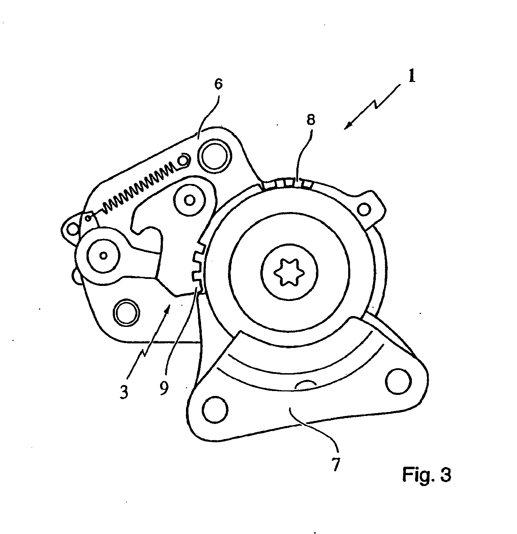

In Figur 3 ist der Beschlag 1 in der Tischposition dargestellt. Es ist deutlich zu erkennen, dass die Verzahnung 9 nunmehr mit den Formschlussmitteln 8' an dem Unterteil 2' zusammenwirkt, insbesondere der erste Bereich 9' der Verzahnung befindet sich mit dem komplementären Formschlussmittel an dem Unterteil 2' im Eingriff. Durch erneutes Betätigen des Entriegelungshebels 15 kann die Verriegelung in der Tischposition wieder gelöst und der Sitz kann in seine Normalstellung verbracht werden, in der dann wiederum die Verzahnung 9 mit den Formschlussmitteln 8 zusammen wirkt. Der Fachmann erkennt, dass das Formschlussmittel 8' auch an einer Halterung, die direkt an dem Sitzteil angeordnet ist, angeordnet sein kann.

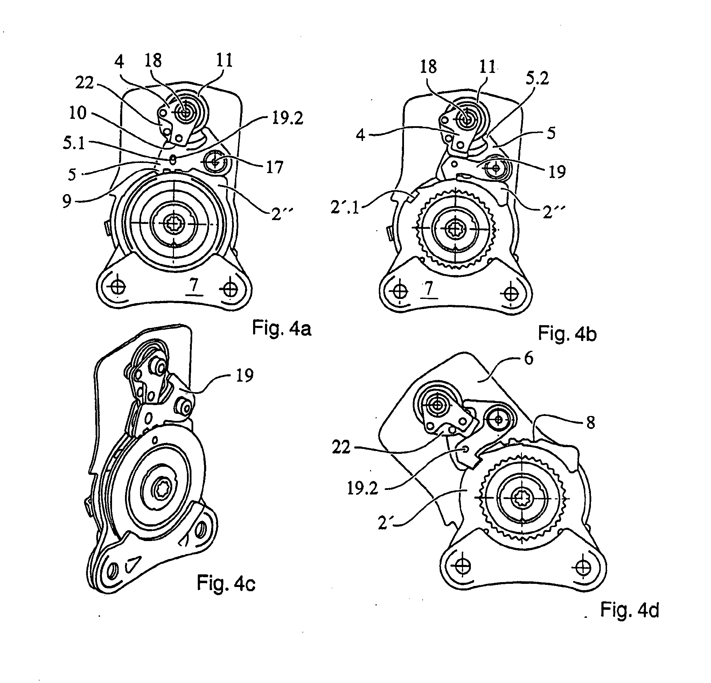

In den **Figuren 4a - 4d** ist eine weitere Ausführungsform des Beschlages 1 gemäß Figur 1 dargestellt. Der Beschlag weist in dem vorliegenden Fall ein Taumelgetriebe zur Neigungsverstellung der Rücklehne 13 relativ zum Sitzteil 14 auf. Dieses Taumelgetriebe besteht aus einem Unterteil 2', das mittels des Beschlagteils 7 an dem Sitzteil befestigt ist und einem Oberteil 2", das mittels des Lehnenteils 6 an der Rücklehne 13 des erfindungsgemäßen Fahrzeugsitzes 12 angeordnet ist. Das Lehnenteil 6 und damit die Rücklehne ist freischwingend, vorzugsweise zentrisch, relativ zu dem Oberteil 2" gelagert. Um zu vermeiden, dass sich das Lehnenteil 6 ungewollt relativ zu dem Oberteil 2" bewegt, ist das Lehnenteil 6 mittels einer Verriegelung 3 mit dem Oberteil 2" verriegelt. Diese Verriegelung 3 besteht aus einem Rastmittel 5, in dem vorliegenden Fall einer Rastklinke 5, die an ihrer Unterseite-Formschlussmittel 9 in Form einer Verzahnung aufweist. Die Rastklinke 5 ist um die Drehachse 17 drehbar gelagert. Um zu vermeiden, dass die Rastklinke 5 ungewollterweise außer Eingriff mit den Formschlussmitteln 8, die an dem Oberteil 2" angeordnet sind, gerät, weist die Verriegelung 3 eine Sperrnocke 4 auf. Das vordere Ende der Spermocke wirkt mit einer Verriegelungskurve 10 zusammen und hindert die Rastklinke 5 daran, sich im Uhrzeigersinn zu drehen. Zur Lösung der Rastklinke 5, beispielsweise durch den Entriegelungshebel 15, wird die Sperrnocke 4 im Uhrzeigersinn und entgegen der Federkraft der Feder 11 verdreht. Dabei wirkt die Nocke 4 mit der Nase 5.2, die an der Rastklinke 5 angeordnet ist, so zusammen, dass sich die Rastklinke 5 im Uhrzeigersinn dreht und die Verzahnung 9 nicht mehr form- und/oder kraftschlüssig mit der Verzahnung 8 des Oberteils 2" zusammenwirkt. Sodann kann das Lehnenteil 6 freischwingend beispielsweise in Richtung des Sitzteils verschwenkt werden. Dort wird sie in der Tisch- und/oder Easy-Entry-Position mit dem Hacken 19, der mit der Einbuchtung 2'.1 zusammenwirkt, verriegelt. Die Verriegelung erfolgt beispielsweise durch Loslassen oder erneute Betätigung des Entriegelungshebels 15. Dadurch bewegen sich der Hacken 19 gegen den Uhrzeigersinn in Richtung der Einbuchtung 2'.1 und der Hacken 19 verhackt sich so mit dieser (**Figur 4d**), dass die Rücklehne nicht im Uhrzeigersinn drehen kann. Da das Taumelgetriebe prinzipbedingt eine exzentrische Bewegung des Lehnenteils 6 gegenüber dem sitzteilseitigen Beschlagteil 7 bewirkt, ist sind die Einbuchtung 2'.1 und der Hacken 19 so gestaltet, dass sie, in jeder Lage der Teile 6, 7 zueinander, miteinander in Eingriff geraten und das Lehnenteil 6 in der Tisch- und/oder Easy-Entry-Stellung sichern. Der Hacken 19 weist einen Bolzen 19.2 auf, der in ein Langloch 5.1 in der Rastklinke 5 eingreift. Dadurch wird die Drehbewegung des Hackens 19 und der Rastklinke 5 zumindest teilweise synchronisiert. Zusätzlich weist der Beschlag in dem vorliegenden Fall eine Easy-Entry-Sperrnocke 22 auf. Diese Easy-Entry-Spermocke 22 betätigt und verriegelt den Hacken 19. Die Easy-Entry-Spermocke 22 ist mit der Nocke 4 verbunden und macht dessen Drehbewegungen mit. In der Easy-Entry-Position sichert die Easy-Entry-Sperrnocke 22 den Hacken 19 gegen eine ungewollte Entriegelung. Zur Lösung der Verriegelung in der Tisch- und/oder Easy-Entry-Position wird die Spermocke 4 gegen den Uhrzeigersinn gedreht und nimmt dabei die Rastklinke 5 mit. Da die Rastklinke 5 ihre Drehbewegung zumindest teilweise auf den Haken 19 überträgt, wird so auch der Hacken 19 im Uhrzeigersinn gedreht, wodurch die Verriegelung zwischen dem Hacken 19 und der Einbuchtung 2'.1 gelöst wird. Die Rückenlehne kann dann wieder in die Gebrauchsposition verbracht und dort mit dem Oberteil 2" verriegelt werden.

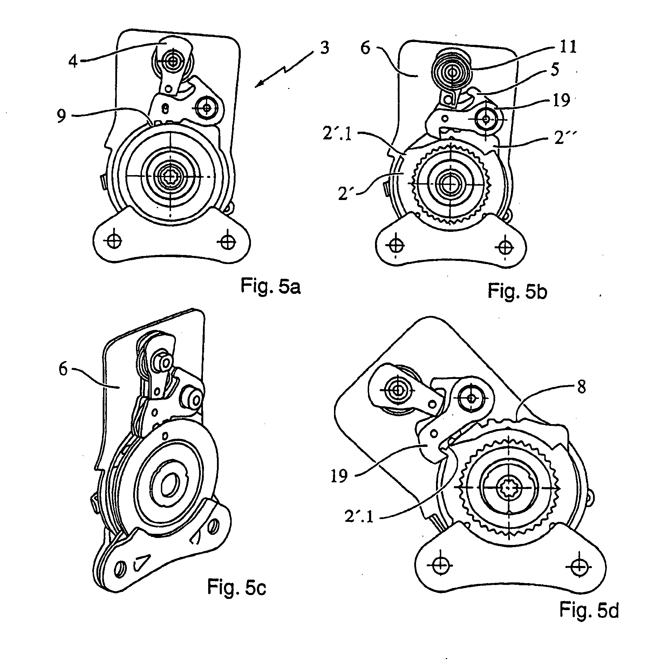

Der Beschlag gemäß den **Figuren 5a - 5d** entspricht im wesentlichen dem Beschlag gemäß den Figuren 4a - 4d, wobei in dem vorliegenden Fall die Verrastungen des Hackens 19 in der Tisch- und/oder Easy-Entry-Position nicht mit einer Einbuchtung, sondern mit einer Nase 2'.1 erfolgt. Ansonsten wird auf die Ausführungen zu den Figuren 4a - 4d verwiesen.

Der Fachmann erkennt, dass der Beschlag 1 in den Figuren 2 - 5 als sogenannter Lamellenbeschlag gestaltet sein kann, der mehrere, vorzugsweise zwei, Unterteile 2' und Oberteile 2", und/oder mehrere, vorzugsweise zwei, Rastklinken 5 und Sperrnocken 4 aufweist, wobei sich die Halterung 7 und der Hacken 19 in der Mitte befinden und lediglich einfach ausgeführt sind.

### Bezugszeichenliste:

- 1: Beschlag
- 2: Taumelgetriebe, Recliner
- 2': Unterteil
- 2'.1: Formschlussmittel, Nase
- 2": Oberteil
- 3: Verriegelung
- 4: Sperrnocke
- 5: Rastmittel, Rastklinke
- 5.1: Langloch
- 6: Lehnenteil
- 7: Beschlagteil, Halterung
- 8: Formschlussmittel, Verzahnung
- 8': Formschlussmittel, Verzahnung
- 9: Formschlussmittel, Verzahnung
- 9': erster Bereich der Verzahnung
- 9": zweiter Bereich der Verzahnung
- 10: Verriegelungskurve
- 11: Federmittel
- 12: Fahrzeugsitz
- 13: Lehne
- 14: Sitz
- 15: Entriegelungshebel
- 16: Handrad
- 17: Drehlager der Rastklinke
- 18: Drehlager der Sperrnocke
- 19: Formschluss-, Rastmittel, Hacken
- 19.1: -
- 19.2: Bolzen
- 20: -
- 21: -
- 22: Sperrmittel, Easy-Entry Sperrnocke

## Patentansprüche

1. Fahrzeugsitz (12), insbesondere Kraftfahrzeugsitz, der ein Sitzteil (14) und eine Lehne (13) aufweist, mit einem Beschlag (1) zur Neigungsverstellung der Lehne (13) relativ zum Sitzteil (14), der ein mit dem Sitzteil (14) verbundenes Unterteil (2') und ein Oberteil (2"), das mit einem Lehnenteil (6) verriegelbar ist, aufweist, wobei das Lehnenteil (6), vorzugsweise zentrisch, freischwingend, relativ zum Oberteil (2 ") gelagert und in mehreren Positionen verriegelbar ist, **dadurch gekennzeichnet, dass** die Verriegelung (3) in mindestens einer Position an dem Unterteil (2') oder an einer direkt mit dem Sitzteil (14) verbundenen Halterung (7) erfolgt.

2. Fahrzeugsitz (12), nach Anspruch 1 oder dem Oberbegriff von Anspruch 1, **dadurch gekennzeichnet, dass** die Verriegelung (3) in jeder Position mit nur einem Rastmittel (5) erfolgt.

3. Fahrzeugsitz nach Anspruch 2, **dadurch gekennzeichnet, dass** das Rastmittel (5) Formschlussmittel (9) aufweist, die mit komplementären Formschlussmiftein (8, 8') an dem Oberteil (2") und/oder dem Unterteil (2') in den jeweiligen Positionen zusammenwirken.

4. Fahrzeugsitz nach Anspruch 3, **dadurch gekennzeichnet, dass** das Formschlussmittel (9) zwei unterschiedliche Bereiche (9', 9") aufweist.

5. Fahrzeugsitz nach einem der Ansprüche 2 - 4, **dadurch gekennzeichnet, dass** das Formschlussmittel (9) Zähne sind.

6. Fahrzeugsitz nach einem der Ansprüche 4 oder 5, **dadurch gekennzeichnet, dass** im Bereich (9') größere Formschlussmittel angeordnet sind als im Bereich (9").

7. Fahrzeugsitz nach einem der Ansprüche 2 - 6, **dadurch gekennzeichnet, dass** Rastmittel (5) eine Rastklinke ist.

8. Fahrzeugsitz nach Anspruch 7, **dadurch gekennzeichnet, dass** die Rastklinke mit einer Sperrnocke (4) in der Gebrauchs-, Easy-entry- und Tischposition verriegelbar ist.

9. Fahrzeugsitz nach einem der voranstehenden Ansprüche, **dadurch gekennzeichnet, dass** der Beschlag (2) ein Taumelgetriebe ist.

10. Fahrzeugsitz nach Anspruch 9, **dadurch gekennzeichnet, dass** die Lageänderung zwischen den Formschlussmitteln (8, 9) durch das vergrößerte Formschlussmittel (9') und/oder eine verlängerte Verriegelungskurve (10) an dem Rastmittel (5), die mit der Sperrnocke (4) zusammenwirkt, kompensierbar ist.

11. Fahrzeugsitz nach einem der voranstehenden Ansprüche, **dadurch gekennzeichnet, dass** der Beschlag (1) ein Formschlussmittel (19) aufweist, das mit einem Formschlussmittel (2.1), das vorzugsweise an dem Unterteil (2'.1) angeordnet ist, zusammenwirkt.

12. Fahrzeugsitz nach Anspruch 11, **dadurch gekennzeichnet, dass** das Formschlussmittel eine Drehachse (17) aufweist, die vorzugsweise auch die Drehachse des Rastmittels (5) ist.

13. Fahrzeugsitz nach Anspruch 11 oder 12, **dadurch gekennzeichnet, dass** sie eine weitere Sperrnocke (22) aufweist, die mit dem Formschlussmittel (19) zusammenwirkt.

14. Fahrzeugsitz nach Anspruch 13, **dadurch gekennzeichnet, dass** die Spermocke (22) eine Drehachse (18) aufweist, die vorzugsweise auch die Drehachse der Spermocke (4) ist.

15. Fahrzeugsitz nach einem der Ansprüche 11 - 14, **dadurch gekennzeichnet, dass** die Sperrnocke (22) das Formschlussmittel (19) betätigt und/oder verriegelt.

16. Fahrzeugsitz nach einem der voranstehenden Ansprüche, **dadurch gekennzeichnet, dass** der Beschlag (1) mehrschichtig aufgebaut ist.
